# EUROPEAN PATENT APPLICATION

(11) **EP 2 939 819 A1**
(43) Date of publication of application: **04.11.2015**
(21) Application number: 14382155.1
(22) Date of filing: 28.04.2014
(51) Int. Cl.: B29C 70/44, B29C 43/36

(54) **Method for manufacturing pieces of composite material by vacuum-baggiing**

(71) Applicant: Airbus Operations, S.L., 28906 Getafe (Madrid) (ES)
(72) Inventor: Pinillos Martínez, Ricardo, 45200 Señorío de Illescas (Toledo) (ES); García Solares, Víctor, 45200 Señorío de Illescas (Toledo) (ES); Muñoz López, M. Pilar, 45200 Señorío de Illescas (Toledo) (ES); Chamorro Alonso, Francisco, Javier, 28906 Getafe (Madrid) (ES); Remacha Jiménez, Marina, 28906 Getafe (Madrid) (ES); Domínguez Escauriaza, Félix, 28906 Getafe (Madrid) (ES)
(74) Representative: Carpintero Lopez, Francisco

(57) **Abstract**

A method for manufacturing pieces of composite material by vacuum-bagging, wherein a laminate (1) of uncured plies of composite material is layered up on a molding surface (17), and the upper surface of the laminate (1) is then covered with one or more caul plates (12,12') to assure smoothness of the outer surface of the final piece. According to the invention, local vacuum bags (13',13",13"') are provided in the form of elongated strips or bands to locally seal the edges of the caul plates (12,12'), such as the area of the local vacuum bags is smaller than the area of any of the caul plates. Due to the use of local vacuum bags, the amount of the material used is significantly reduced, thus, production times and manufacturing cost are significantly reduced.

## Description

### Object of the invention

The present invention refers in general to a vacuum-bagging technique for manufacturing composite parts or pieces, for the construction of aircraft structures.

An object of the invention is to provide a vacuum-bagging manufacturing technique which reduces lead times and manufacturing costs.

The invention is especially advantageous in the manufacture of large components, such as fuselage sections typically constructed in the form of cylindrical, truncated conical, semi-cylindrical, or truncated semi-conical pieces.

### Background of the invention

Vacuum-bagging is a widely used technique in the aircraft and aerospace industry, to manufacture composite components such as carbon-fiber-reinforced-plastics (CFRP), for the construction or aircraft structures such as wings, horizontal and vertical stabilizers, or even fuselage sections of an aircraft.

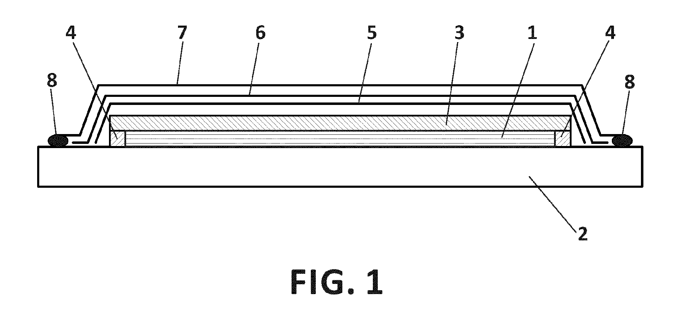

Figure 1 illustrates this manufacturing technique in more detail, wherein it can be observed that a piece to be manufactured is formed on a molding tool or mandrel (2), by laying up a plurality of CFRP plies by means of an ATL of a fiber-placement equipment, to form a prepreg or laminate (1) with the shape of the molding mold, a flat piece in the case of figure 1.

A caul plate (3) having an inner smooth surface, is then placed on top of the uncured laminate (1) in tight contact with it, and a dam member (4) is used to close laterally the assembly to retain the resin during curing. The caul plate (3) is a flexible metallic or composite plate, and it is used to assure that the outer surface of the piece to be obtained, is smooth and free of imperfections, which is of paramount importance, since that outer surface will form the aerodynamic surface of an aircraft, or in other cases it will be assembled with another components with a reduced tolerance.

The caul plate (3) is then covered with a release film (5) which is in turn covered by a breather sheet or cloth (6), which function is to allow air and gas to flow out from all parts of the assembly while vacuum is applied inside the vacuum-bag (7).

The whole assembly formed by the previously mentioned elements, is finally covered with a sealing film or vacuum-bag (7) which is sealed at its perimeter by means of a sealing tape (8) with the curing tool (2), so that the laminate (1) and the caul plate (3) are completely enclosed within an air-tight chamber defined by the male tool (2) and the vacuum-bag (7), as shown in figure 1.

The laminate (1) is then cured in an autoclave by applying heat and pressure, such as during the curing process, air and gases generated inside the vacuum bag (7) are suctioned by a vacuum pump (not shown) and evacuated to the exterior. After curing the laminate (1), a piece of composite material is finally obtained, which is then cooled down, de-molded and cleaned. At this final process, the release film (5) ensures that the vacuum-bag (7) can be easily removed from the caul plate.

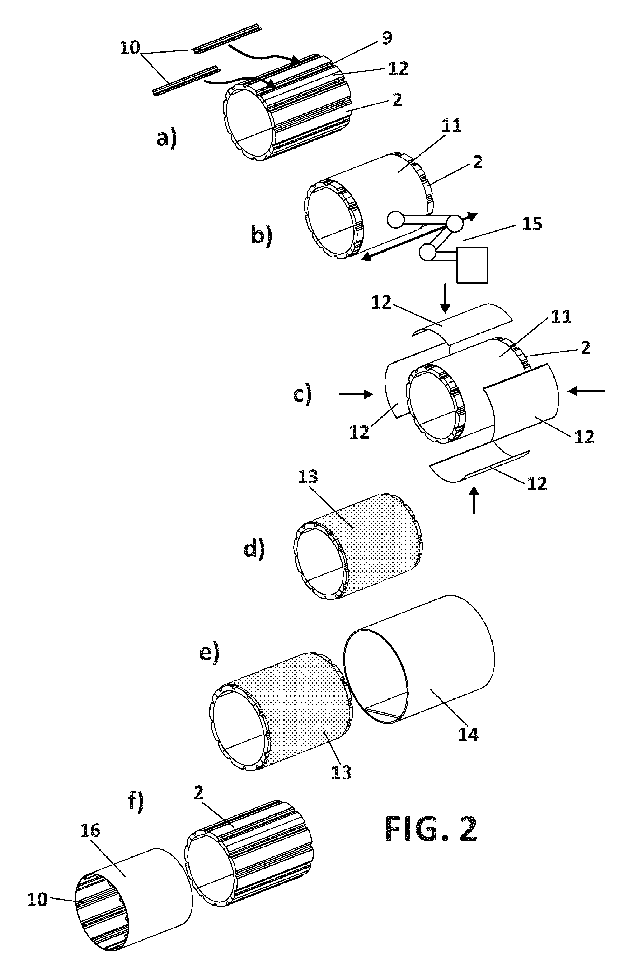

Tubular fuselage skin sections can also be manufactured using this technique as shown in figure 2. This figure illustrates in a sequence of drawings (a - f) the steps for manufacturing a barrel-shaped fuselage section according to the prior art, which is formed by an outer skin internally reinforced with omega or T stringers, all of them obtained as an integral single-piece. Beams and frames are assembled in a subsequent step.

Drawing (a) shows a tubular male tool (2) or mandrel provided with a moulding surface (17) having the shape and dimensions of a fuselage section to be obtained. This male tool (2) is provided with a plurality of longitudinal slots (9) formed on that moulding surface for receiving respective (no yet cured) omega-shaped stringers (10).

Drawing (b) shows how a laminate (11) is then conventionally formed by laying up a plurality of CFRP plies by means of a fiber-placement equipment (15), on the moulding surface (17) and also on the stringers (10). This laminate will form the skin of the fuselage section.

Drawing (c) once the laminate (11) has been completed, several caul plates (12) are positioned on the upper surface of the laminate (11). In this case four caul plates (12) are used to cover the entire laminate surface.

Drawing (d) shows how the caul plates (12) are then covered with a large vacuum bag (13) dimensioned to enclose the whole assembly. This vacuum bag is sealed at its edges on the male tool.

Drawing (e) shows how the entire assembly is then placed inside an autoclave (14) for co-curing and consolidating the laminate together with the stringers, by the simultaneous application of heat and pressure, process during which air and gases are pumped out from the inside of the vacuum bag.

Drawing (f) shows a barrel-shaped piece (16) is finally obtained as an integral body. The vacuum bag is removed and the piece (16) is de-moulded from the male tool (2).

These type of vacuum-bags cannot be re-used, thus, after each process the vacuum bag is thrown away and a new bag has to be provided for the next manufacturing cycle.

Vacuum-bags are typically made of a polymer material such as nylon, and as it can be observed specially in drawing (d), several square meters of this material are necessary to cover the whole assembly in case of large fuselage parts, which significantly increase the manufacturing cost.

On the other hand, due to the large size of these vacuum bags, bagging operations for handling and positioning the bags in the male tool, are both time-consuming and cumbersome, and involve a high risk of accidentally damaging the bag.

### Summary of the invention

The present invention is defined in the attached independent claim and it overcomes the above-mentioned drawbacks of the prior art, by providing a vacuum-bagging technique which reduces both manufacturing cost and lead times.

The invention refers to a method for manufacturing pieces of composite material as the one defined with relation to figures 1 and 2, wherein the traditional bagging process of using large vacuum bags to enclose the whole assembly, is replaced by a local bagging concept, wherein only the gaps formed by the edges of the caul plates are sealed with a sealing film or vacuum bag, so that the bagging process is optimized in terms of amount of material used and production time.

According to the invention, only the edges of the caul plates are locally sealed, so that two possibilities are contemplated:
- local bagging to seal separation gaps or lines between adjacent caul-plates, and
- local bagging to seal free edges of caul-plates with the male tool.

More specifically, an aspect of the invention refers to a method for manufacturing pieces of composite material which comprises the steps of providing a male tool with a molding surface to conform a piece to be manufactured with a desired shape, and forming a laminate of uncured plies of composite material on that molding surface.

Once the laminate is completed, the whole upper surface of the laminate is covered with at least one caul plate, wherein each caul plate has an area delimited by several edges, usually four edges since caul plate usually have a square or rectangular configuration either flat or curved. In this process, the caul plates are arranged side by side, that is, adjacent one another, so that separation gaps or lines are defined between the edges of two consecutive caul plates.

In the method of the invention, local vacuum bags in the form of elongated strips or bands are provided, which are sized to locally seal the edges of the caul plates, that is, these vacuum bags are cut or dimensioned to cover only the edges of the caul plates and nearby areas, so that a major part of the upper surface of the caul plates is not covered by the vacuum bags. Therefore, the area of any of the local bags used in the method, is much smaller than the area of any of the caul plates intervening in the process.

The laminate to be cured is thereby enclosed within an air-tight chamber delimited at its lower surface by the male tool, and at its upper surface by the caul plates in combination with the local vacuum bags sealing only the edges of the caul plates. In contrast with the prior art wherein caul plates are also enclosed within the vacuum bag (see figure 1), in the present invention the caul plates are not enclosed within the vacuum bag, instead the caul plates are used to form the air-tight chamber within which the piece to be formed is enclosed, hence in the present invention, there is no need for a vacuum bag of large size.

The laminate is then cured in an autoclave while vacuum is applied to said air-tight chamber, so that the total area of the vacuum bags used for curing the laminate, that is, the sum of the individual areas of all the vacuum bags used, is smaller than the total area of the upper surface of all the caul plates.

The technical effect and advantage derived from the use of local bags, is that the amount of vacuum bag material required is significantly reduced, which in turn not only reduce production costs, but also simplify bagging operations and mitigate the risk of damaging the bag.

Another aspect of the invention refers to a tooling for manufacturing aeronautical components made of composite materials, such as fuselage sections. More specifically the invention refers to CFRP caul plates specially adapted to be used in the manufacturing process previously described, for which caul plates are manufactured as air-tight component and configured with tapered edges, to facilitate the local sealing of their edges an assure that the whole tooling system is airtight.

### Brief description of the drawings

Preferred embodiments of the invention, are henceforth described with reference to the accompanying drawings, wherein:
Figure 1.- shows an schematic representation of a vacuum bagging assembly according to the prior art.
Figure 2.- shows an schematic representation of a complete sequence (from top to bottom) of a manufacturing process according to the prior art, for the production of a tubular fuselage section of an aircraft, wherein the elements are represented in perspective view.
Figure 3.- shows an schematic representation in perspective view of a vacuum-bagging technique according to the invention, applied to the manufacture of truncated conical rear section of an aircraft fuselage. The vacuum-bags are represented as transparent elements to show more clearly their sealing edges.
Figure 4.- shows a schematic representation in perspective view of another exemplary embodiment according to the invention.
Figure 5.- shows another schematic representation according to the invention, in this case applied to the manufacture of substantially flat pieces of composite material.
Figure 6.- shows in a perspective view the specific design of the caul plates according to the invention. The figure includes a partial enlarged view of an annular section of the caul plates edges having tapered edges.

### Preferred embodiment of the invention

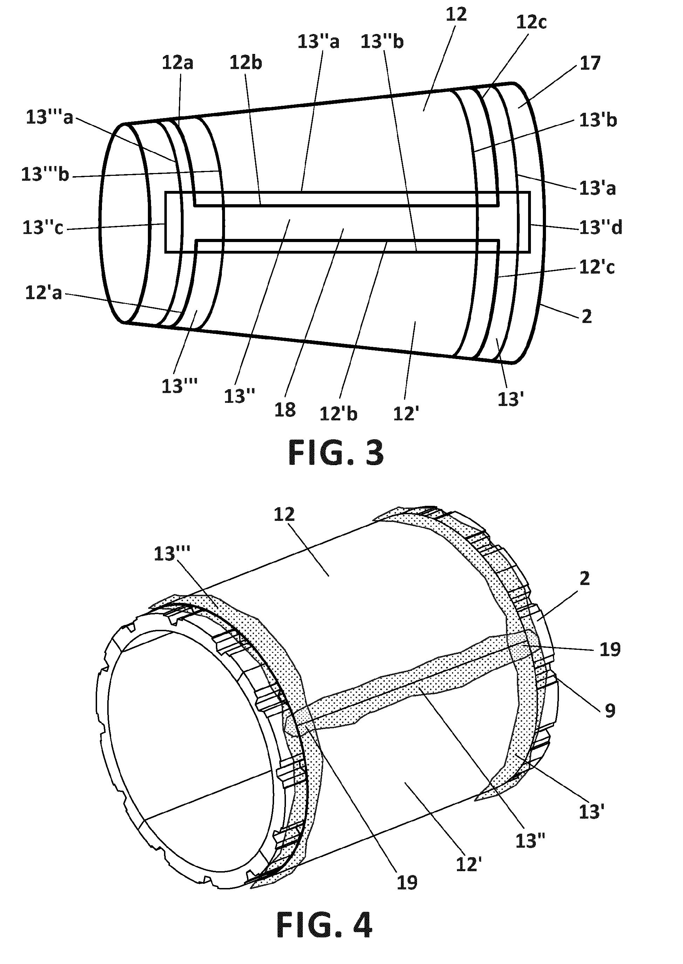

Figures 3 and 4 illustrate an example of a method according to the invention, in this case for manufacturing barrel-shaped piece of composite material corresponding to a fuselage section of an aircraft, wherein the method comprises the steps previously described with respect to figure 2, but instead of using a large vacuum bag (13) dimensioned to enclose the whole assembly, several sealing films or local vacuum bags (13',13", 13"') of reduced size, are used to cover locally the edges of the caul plates (12), so that the total area of the local vacuum bags (13',13", 13'") used, is much smaller than the area of any of the caul plates (12) of the assembly.

As it can be observed in figures 3 and 4, the manufacturing process is carried out using only local vacuum bags (13',13", 13'"), which provide the required air-tightness for curing the laminate with the aid of the caul plates, in such a manner that the process of curing the laminate is performed with the caul plates having a major part of their upper surface not covered by a vacuum bag at all, or expressed in positive terms, a major part of the upper surface of the caul plates is exposed directly to the environment inside the autoclave, such as the gas inside the autoclave is in direct contact with that major surface of the caul plates.

The term sealing locally here means that the local vacuum bags (13',13",13'"), are shaped and dimensioned to cover only the edges of the caul plates and small nearby areas (of the caul plates and/or the male tool) adjacent to those edges. For that, the vacuum bags (13',13", 13'") consist of a film configured as elongated strips or bands having a general rectangular shape as shown in figures 2 and 3, although the edges of these bags no need to be completely straight.

These local vacuum bags (13',13",13'") are arranged along the edges (12a, 12b,12c,126,12'b,12'c) of all the existing caul plates (12, 12'), and are sealed along sealing lines which run substantially parallel to the sealing line to be covered. More specifically in figure 3 these lines are: sealing lines (13'a,13'b,) corresponding to a first local vacuum bag (13'), sealing lines (13"a,13"b,13"c,13"d) corresponding to a second local vacuum bag (13"), and sealing lines (13"'a,13'"b,) corresponding to a third local vacuum bag (13'"). It should be noted that only three edges of the caul plates (12, 12'), and two sealing lines of the first and third local vacuum bags

(13', 13"') are shown in figure 3, but the skilled person in this field would be able to easily understand where the not-shown edges and sealing lines are located, taking into account that only two caul plates are used in figure 3.

A separation line or gap (18) is defined between adjacent edges (12b,12'b) corresponding respectively to caul plates (12,12'), such as the second local vacuum bag is sealed along sealing lines (13"a,13"b) right on the upper surface of the caul plates (12,12'). In this case of the remaining edges of the caul plates, which could be called free edged, since they are not adjacent or facing an edge of a consecutive caul plate, the respective vacuum bag is sealed along a first sealing line running on the upper surface of the caul plate, and a second sealing line is running on the molding surface (17) of the male tool (2).

As it can be noted in figures 3 and 4, the local vacuum bags (13',13",13'") overlaps on overlapping regions (19) located at the corners of the caul plates (12,12'), so that, parts of the second local vacuum bag (13") are sealed right on the first and third local vacuum bags (13',13'").

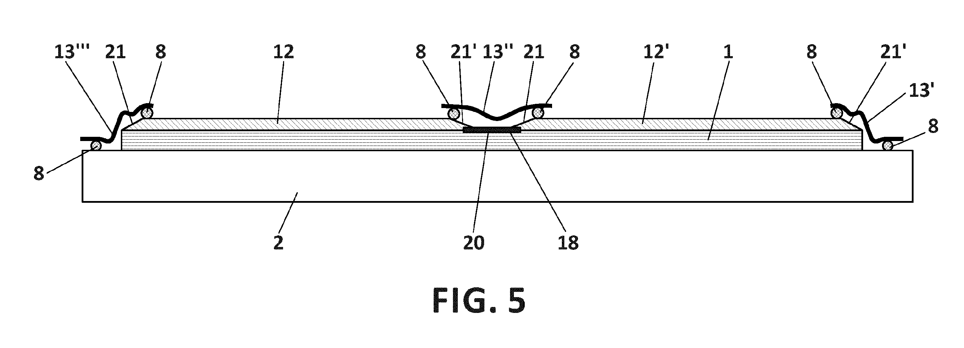

Figure 5 is another example of an implementation of a method according to the invention, in this case for the manufacture of a flat CFRP piece, wherein it can be appreciated more clearly how according to the invention the total area of the local vacuum bags (13',13",13'") used for curing a laminate (1), is much smaller than the total area of the upper surface of all the caul plates (12,12'), or in other words the total area of the local vacuum bags used proportional to the dimension of the laminate (1), is significantly small.

The invention also comprises the use of metallic blades or strips (20) placed at the separation line or gap (18) originated at the interface between adjacent caul plates (12,12'). Since caul plates (12,12') have to provide a smooth inner surface, these blades or strips (20) also have a smooth inner surface, which is flush with the inner surfaces of the caul plates (12,12'), to provide a smooth transition between two caul plates and avoid unwanted seams during curing process. It can be observed in figure 5 how the caul plates (12,12') are provided with tapered edges (21,21').

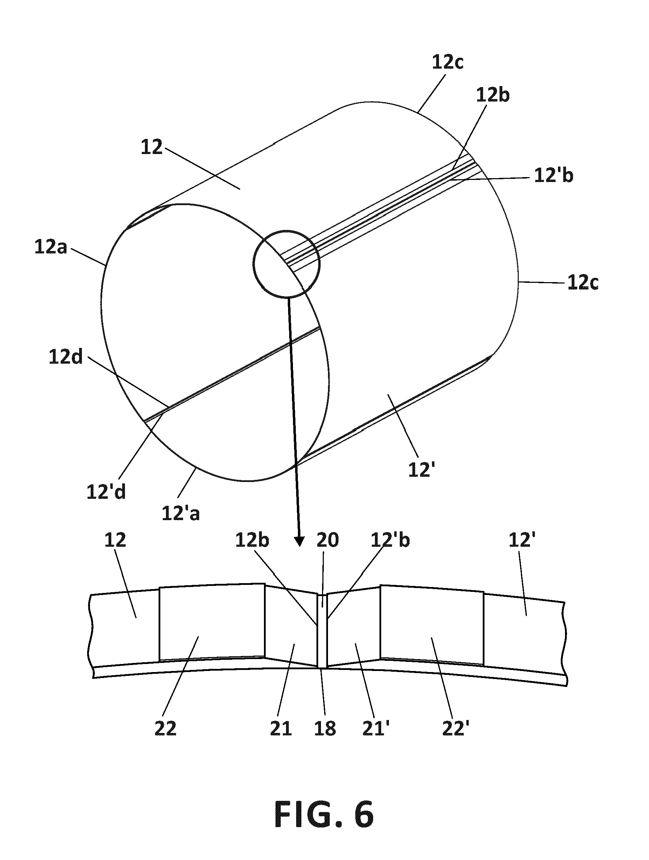

Figure 6 illustrates more clearly this specific design of the caul plates according to the invention, which is specially adapted for their use in the previously described method. These caul plates (12,12') comprises four edges, front and rear edges (free edges) (12a,12c,126,12'c), and side edges (12b,12d,12'b,12'd) respectively, wherein the side edges (12b,12d,12'b,12'd) are tapered so that they have the form of ramp or slope (21,21'), in such a manner that an V-shaped channel is formed by these two edges. The advantage of having those tapered edges, is that sharp edges at the interface between two caul plates are avoided, in order to prevent damaging the local vacuum bag which will tightly fit on that tapered edges upon the application of vacuum.

Adjacent those tapered edges (21,21'), the caul plates are provided with a smooth or polished surface (22,22'), that is without imperfections, which suitable to adhere sealing tape used to seal the edges of the local vacuum bag with the caul plate.

In the enlarged view of figure 6, it can be observed a metallic strip (20) received within the separation gap between the tapered edges of the caul plates, which provides a transition surface between the caul plates to avoid imperfections in the piece.

Since the caul plates are arranged to form the air-tight chamber within which the piece to be formed is enclosed as shown in figure 5, these caul plates are manufactured as air-tight components, preferably made of composite material in a known manner. To obtain that air-tightness property, the caul plates are manufactured with a minimum thickness for each particular application, to assure the dimensional stability of the same and avoid cracks due to deformation of the caul plate.

Furthermore, during the formation of the caul plates, the plies are layered up in such a manner that they overlap at their edges, and the plies of one layer are offset with respect to the plies of upper and lower layers as to reduce the formation of gaps in the caul plates. Finally, the air-tightness of the caul plates is checked before their use.

Other preferred embodiments of the present invention are described in the appended dependent claims and the multiple combinations thereof.

## Claims

1. Method for manufacturing pieces of composite material by vacuum-bagging comprising the steps of:
providing a male tool with a molding surface to conform a piece to be manufactured with a desired shape,
forming a laminate of uncured plies of composite material on the molding surface,
covering the upper surface of the laminate with at least one caul plate, wherein the at least one caul plate has an area delimited by several edges,
**characterized in that** the method further comprises the step of:
providing local vacuum bags in the form of elongated strips, wherein the area of each local vacuum bag is smaller than the area of any of the caul plates,
locally sealing the edges of the caul plates with the local vacuum bags,
and curing the laminate such as the total area of the vacuum bags used for curing the laminate, is smaller than the total area of the upper surface of the caul plates.

2. Method according to claim 1 wherein the laminate is enclosed within an air-tight chamber delimited by the molding surface of the male tool, and the caul plates in combination with the local vacuum bags, and wherein vacuum is applied to that chamber during curing.

3. Method according to claim 1 or 2 wherein the process of curing the laminate is performed with the caul plates having a major part of their upper surface exposed directly to the environment inside an autoclave.

4. Method according to any of the preceding claims wherein the local vacuum bags is a film having a rectangular configuration.

5. Method according to any of the preceding claims wherein the local vacuum bags are arranged so that two local vacuum bags partially overlaps.

6. Method according to any of the preceding claims wherein the caul plates are arranged adjacent one another, such as separation gaps are defined between the edges of consecutive caul plates, and wherein a metallic strip is arranged at that separation gap to form a transition surface with the inner surface of two consecutive caul plates.

7. Method according to any of the preceding claims further comprising the step of providing caul plates with tapered side edges and arranging the caul plates such as an V-shaped channel is defined between two consecutive caul plates.

8. Method according to claim 7 wherein the caul plates are additionally provided with an polished surface adjacent the tapered side edges.

9. Method according to any of the preceding claims wherein the male tool has the form of a barrel and it is configured to conform a tubular composite piece.
